(19) **Europäisches Patentamt / European Patent Office / Office européen des brevets**

(11) **EP 4 371 892 B1**

(12) **FASCICULE DE BREVET EUROPEEN**

(45) Date de publication et mention
de la délivrance du brevet:
**03.09.2025 Bulletin 2025/36**

(21) Numéro de dépôt: **23208151.3**

(22) Date de dépôt: **07.11.2023**

(51) Classification Internationale des Brevets (IPC):
**B64U 20/87** *(2023.01)*   **B64U 10/25** *(2023.01)*
**B64U 50/13** *(2023.01)*   **G01S 13/933** *(2020.01)*
**B64U 20/70** *(2023.01)*   **B64C 39/04** *(2006.01)*
**B64C 1/36** *(2006.01)*

(52) Classification Coopérative des Brevets (CPC):
**B64U 10/25; B64C 1/36; B64C 39/04; B64U 20/70;
B64U 20/87; B64U 50/13; G01S 7/027;
G01S 7/295; G01S 13/87; G01S 13/933**

(54) **AÉRONEF SANS ÉQUIPAGE COMPRENANT DEUX RADARS**

**UNBEMANNTES LUFTFAHRZEUG MIT ZWEI RADAREN**

**UNMANNED AIRCRAFT COMPRISING TWO RADARS**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **18.11.2022 FR 2212022**

(43) Date de publication de la demande:
**22.05.2024 Bulletin 2024/21**

(73) Titulaire: **THALES**
**92190 Meudon (FR)**

(72) Inventeurs:
• **RIEDINGER, Marc**
**31036 Toulouse Cedex (FR)**

• **GUILLOUET, Eric**
**31036 Toulouse Cedex (FR)**
• **BONNET, Antoine**
**31036 Toulouse Cedex (FR)**
• **GOUHIER, Patrick**
**31036 Toulouse Cedex (FR)**

(74) Mandataire: **Atout PI Laplace
Immeuble Up On
25 Boulevard Romain Rolland
CS 40072
75685 Paris Cedex 14 (FR)**

(56) Documents cités:
**WO-A1-2015/115913     WO-A1-2022/180026
DE-A1- 102016 116 106     US-A- 5 145 129
US-A1- 2017 205 505**

**Description**

L'invention concerne en particulier un aéronef du genre avion sans équipage.

Un avion (c'est-à-dire un aérodyne à voilure fixe) sans équipage est dénommé « véhicule aérien sans pilote » ou « UAV » (pour « Unmanned Aircraft Vehicle » en anglais) ou, plus généralement, « drone aérien ».

Les réglementations aériennes concernant les drones aériens destinés à intégrer l'espace aérien civil, incluent des exigences très sévères de taux de détection et d'évitement de tous types d'aéronefs. De telles réglementations sont définies entre autres par l'Union Européenne. Le but est de maintenir un haut niveau de sécurité pour la navigation de tous les usagers d'un espace aérien en évitant les risques de collision.

Le niveau de sécurité des drones aériens est souvent insuffisant pour permettre leur utilisation au-dessus des populations, ou dans un espace aérien non ségrégué, c'est-à-dire un espace aérien qui n'est pas réservé exclusivement à la circulation de ce drone. Pour être autorisés à effectuer de telles opérations, les drones aériens doivent être certifiés afin de garantir un niveau de sécurité égal ou supérieur à celui des avions avec équipage.

Il est en effet attendu que les drones aériens soient responsables de l'évitement des autres aéronefs, incluant les aéronefs non collaboratifs, tels que certains avions et planeurs non équipés de transmetteurs, comme par exemple les parapentes, les ultra-légers motorisés (ou « ULMs ») ou les ballons. Ces exigences se traduisent notamment par la nécessité pour chaque drone aérien de détecter et suivre les aéronefs non collaboratifs situés dans un champ de vision d'au moins +/-110 degrés horizontalement et au moins +/- 15 degrés verticalement de part et d'autre de l'axe du drone aérien. Dans la suite de la présente demande, on désignera par champ de vision horizontal, l'envergure du champ de vision du radar suivant un plan médian de l'aéronef comprenant une direction longitudinale de l'aéronef. Ce plan médian correspond notamment au plan horizontal lors d'un vol de l'aéronef. Par opposition, le champ de vision vertical désigne l'envergure du champ de vision du radar suivant un plan perpendiculaire audit plan médian et qui correspond au plan vertical lors d'un vol de l'aéronef.

Parmi les systèmes de détection connus, on connait les systèmes de vision par caméra. Cependant, la vision par caméra peine encore à distinguer un aéronef en mouvement sur un fond terrestre. Seules les technologies de type radar permettent un taux de détection fiable en dessous de la ligne d'horizon (-15 degrés verticalement). Mais le champ de vision horizontal des radars n'excède généralement pas +/- 60 degrés. Cela oblige généralement à utiliser deux radars.

Par ailleurs, les radars doivent être positionnés de façon que leurs performances de détection ne soient pas pénalisées par la structure de l'aéronef. On connait un aéronef sans équipage qui comprend trois poutres parallèles s'étendant suivant au moins une direction longitudinale depuis un côté arrière jusqu'à un côté avant de l'aéronef. La poutre centrale forme un fuselage principal contenant un système motopropulseur. Une hélice est attachée à une extrémité avant de la poutre centrale pour être entrainée par le système motopropulseur.

Il se pose le problème de savoir comment positionner des radars sur ce type d'aéronef sans dégrader les performances de détection des radars. Le document US5145129A divulgue un aéronef V/STOL sans pilote comportant des hélices coaxiales et des structures de flèche/canard.

A cet effet, l'invention propose un aéronef sans équipage comprenant trois poutres parallèles s'étendant suivant au moins une direction longitudinale depuis un côté arrière jusqu'à un côté avant de l'aéronef, la poutre centrale formant un fuselage principal contenant un système motopropulseur, une hélice de diamètre D configurée pour être entrainée par ledit système motopropulseur étant attachée à une extrémité avant de la poutre centrale, chaque poutre latérale étant à une distance L/2 de ladite poutre centrale et chaque poutre latérale portant un radar à une extrémité avant de la poutre.

Ainsi, dans l'aéronef selon l'invention, les radars sont positionnés sur la pointe de chaque poutre latérale. Cette position est particulièrement avantageuse car elle permet de limiter les interférences du corps de l'aéronef avec les rayonnements des radars. Une telle position est par exemple plus avantageuse qu'un positionnement en extrémité de la poutre principale lorsque celle-ci est déjà occupée par l'hélice.

Selon un mode de réalisation, les champs de vision horizontaux des radars ont un demi angle d'ouverture maximal a et les radars sont orientés de sorte que leur champ de vision horizontal respectif est orienté vers l'extérieur avec un angle m par rapport à la direction longitudinale.

Selon une variante, les champs de vision horizontaux des radars ont respectivement une zone angulaire périphérique d'angle $\delta a$ dans laquelle la sensibilité du radar est atténuée par rapport à la sensibilité du radar dans une zone centrale du champ de vision horizontal, l'angle m par rapport à la direction longitudinale étant égal à la différence entre le demi angle d'ouverture maximal a et l'angle $\delta a$ de ladite zone angulaire périphérique.

Selon un mode de réalisation, l'aéronef comprend une voilure croisant lesdites poutres de manière sensiblement perpendiculaire, les extrémités distales de la voilure étant à une distance b/2 par rapport à la poutre centrale, et à une distance PW par rapport à l'extrémité avant de la poutre centrale suivant ladite direction longitudinale.

Les extrémités avant des poutres latérales sont situées derrière l'extrémité avant de la poutre centrale suivant un sens arrière-avant de l'aéronef, à une distance OP de l'extrémité avant de la poutre centrale suivant ladite direction longitudinale.

Selon une variante, ladite distance OP entre l'extrémité avant de la poutre centrale et les extrémités avant des poutres latérales suivant ladite direction longitudinale est configurée de sorte que ladite hélice est hors du champ de vision horizontal des radars.

Selon une variante, ladite distance OP entre l'extrémité avant de la poutre centrale et les extrémités avant des poutres latérales suivant ladite direction longitudinale est configurée de sorte que ladite voilure est hors du champ de vision horizontal des radars.

Selon une variante, l'angle m par rapport à la dite direction longitudinale est configuré de sorte que ladite voilure est hors du champ de vision horizontal des radars.

Selon une variante, l'angle m par rapport à la dite direction longitudinale est configuré de sorte que ladite hélice est hors du champ de vision horizontal des radars.

Selon une variante, l'angle m des champs de vision horizontaux des radars par rapport à la direction longitudinale, le demi angle d'ouverture maximal a des radars, la distance b /2 des extrémités distales de la voilure par rapport à la poutre centrale, le diamètre D de l'hélice, la distance OP entre l'extrémité avant de la poutre centrale et les extrémités avant des poutres latérales suivant ladite direction longitudinale, et la distance PW entre les extrémités distales de la voilure et l'extrémité avant de la poutre centrale suivant ladite direction longitudinale sont tels que :

[Math 1]

$$\frac{D}{2} < \frac{L}{2} - OP \times \tan(a - m)$$

[Math 2]

$$\left(\frac{b}{2} - \frac{L}{2}\right) \times \tan(a + m - 90) < PW - OP.$$

Selon un mode de réalisation, les dites poutres latérales forment des fuselages secondaires de l'aéronef, et de préférence comprennent respectivement une unité électronique de commande de leur radar respectif.

Selon un mode de réalisation, l'aéronef comprend une unité de commande configurée pour réaliser une fusion des données issues des radars portés par lesdites poutres latérales, ou une fusion des données issues des radars et des données issues d'au moins un autre capteur.

D'autres caractéristiques et avantages de la présente invention apparaîtront mieux à la lecture de la description qui suit en relation aux figures annexées suivantes :

[Fig. 1] : la figure 1 présente un exemple d'aéronef selon l'invention ;
[Fig. 2] : la figure 2 illustre un procédé de fusion de données issues de radars de l'exemple d'aéronef de la figure 1.

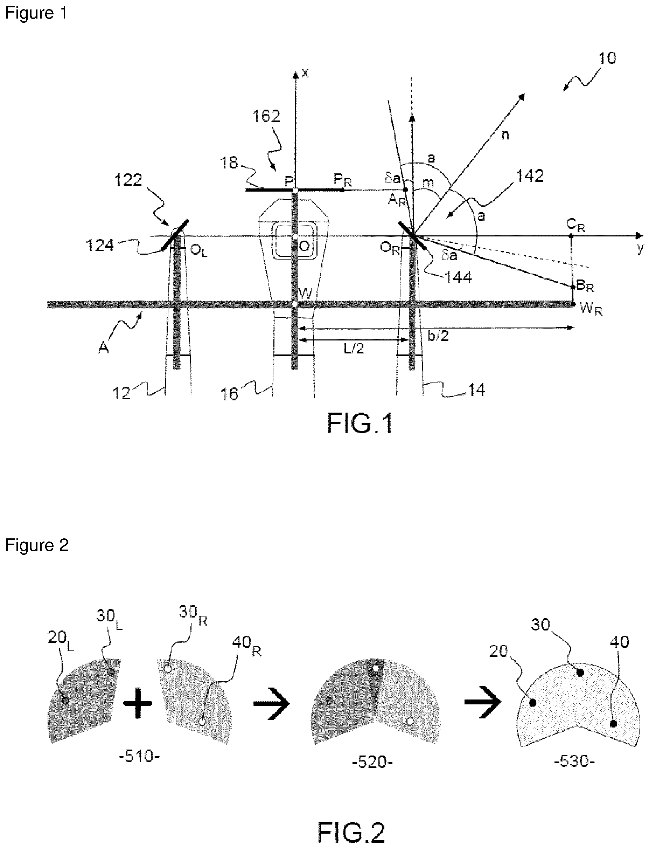

La figure 1 montre une vue schématique de dessus du côté avant d'un exemple d'aéronef sans équipage 10 selon l'invention. L'aéronef 10 comprend trois poutres 12, 14, 16 parallèles qui s'étendent suivant une direction longitudinale X de l'aéronef 10.

La poutre centrale 16 forme un fuselage principal de l'aéronef 10. Elle comprend un système moto propulseur qui entraine une hélice 18 attachée à une extrémité avant 162 de la poutre centrale 16. Les poutres latérales 12, 14 sont chacune à une distance L/2 de la poutre centrale 16. Notamment, la distance L/2 s'apprécie depuis un axe central de la poutre centrale 16 s'étendant le long de la direction longitudinale X. Les poutres 12, 14, 16 s'étendent de l'arrière à l'avant de l'aéronef 10. Elles s'étendent notamment suivant un plan longitudinal de l'aéronef 10. Lorsque l'aéronef 10 est en vol suivant un plan horizontal, les poutres 12, 14, 16 se trouvent alors à une même altitude. Cela limite l'encombrement de l'aéronef 10.

Chaque poutre latérale 12, 14 porte à son extrémité avant 122, 142 un radar 124, 144. Ainsi, les radars 124, 124 sont positionnés sur l'aéronef 10 en utilisant les particularités structurelles de celui-ci. Les poutres latérales 12, 14 servent d'abord la stabilisation et l'aérodynamisme de l'aéronef 10. En intégrant les radars 124, 144 à leurs extrémités avant 122, 142, on profite d'un emplacement privilégié de l'aéronef 10 où les interactions avec le corps de l'aéronef 10 sont limitées. Ainsi, un risque de dégradation des performances de détection des radars 124, 144 est réduit. En particulier, les radars 124, 144 sont intégrés dans leurs poutres respectives 122, 142, ce qui améliore la trainée aérodynamique de l'aéronef 10.

Les poutres latérales 12, 14 forment notamment des fuselages secondaires de l'aéronef 10. Elles peuvent loger chacune une unité électronique de commande de leur radar respectif 124, 144.

En particulier, le centre de rotation P de l'hélice 18 est à l'extrémité de la poutre centrale 162. Or cette position est celle permettant une détection la plus sure des objets environnants par les radars. Mais du fait de la présence de l'hélice 18, le positionnement des radars 124, 144 en extrémité des poutres latérales 12, 14 est un compromis avantageux qui préserve la structure de l'aéronef 10 tout en permettant une détection des objets environnants.

Notamment, afin de limiter encore l'interférence du corps de l'aéronef 10 avec les rayonnements des radars 124, 144, le champ de vision horizontal de chaque radar 124,144 est orienté vers l'extérieur avec un angle m par rapport à la direction longitudinale X de l'aéronef 10. Autrement dit, chaque radar 124,144 est orienté de sorte que la bissectrice n du champ de vision horizontal fait un angle m avec la direction longitudinale X en s'éloignant de la poutre centrale 16. La bissectrice n du champ de vision horizontal correspond notamment à une direction normale au foyer $O_R$, $O_L$ du radar 124, 144. Cette orientation des radars 124,144 permet en outre d'augmenter le champ de vision horizontal total obtenu avec les deux radars 124, 144. L'angle m est en particulier non nul et de même valeur absolue pour les deux radars 124,144.

Typiquement, le champ de vision horizontal d'un radar a un demi-angle d'ouverture maximal a qui caractérise l'angle 2a au-delà duquel la sensibilité du radar est trop faible pour être exploitable. Le champ de vision horizontal de chaque radar 124, 144 présente donc un demi-angle d'ouverture maximal a de part et d'autre de la bissectrice n du radar 124, 144. Cependant, en bordure du champ de vision horizontal, il peut exister une zone angulaire d'angle δa dans laquelle la détection reste moins précise. Dans cette zone angulaire périphérique d'angle δa, la sensibilité du radar 124, 144 est atténuée par rapport à la sensibilité du radar 124, 144 dans une zone centrale du champ de vision horizontal, c'est-à-dire à proximité de la normale n du radar 124, 144. Une telle zone angulaire périphérique d'angle δa est notamment due aux caractéristiques des lobes de détection externes.

Par conséquent, en vue d'améliorer la détection d'objets à l'avant de l'aéronef 10, on peut prévoir un recouvrement des champs de vision horizontaux des radars 124, 144. L'angle m du champ de vision horizontal par rapport à la direction longitudinale X n'est alors pas égal au demi angle d'ouverture maximale a, mais est égal à la différence entre le demi angle d'ouverture maximal a et l'angle δa de la zone angulaire périphérique, située en bordure du champ de vision horizontal. Le demi angle d'ouverture maximal a peut être égal à 60° et l'angle δa de la zone angulaire périphérique peut être égal à 10°.

Lors du fonctionnement des radars 124, 144, notamment lors d'un vol de l'aéronef 10, leurs données sont de préférence fusionnées. Comme illustré par exemple en figure 2, dans une première étape 510 chaque radar fournit des « pistes » $20_L$, $30_L$, $30_R$, $40_R$ qui correspondent aux échos des objets détectés dans leur champ de vision respectif. Dans une étape 520 les données sont regroupées. Or, étant donné la précision limitée des radars 124, 144 dans leur zone de chevauchement, les pistes $30_L$, $30_R$ se trouvant dans cette zone et correspondant à un même objet, ne seront pas parfaitement superposées. De préférence, au cours d'une étape 530, le procédé de fusion tient donc compte de plusieurs critères pour identifier les pistes pouvant provenir du même objet 10, 30, 40. De tels critères de ces pistes comprennent par exemple leur distance relative, radiale et/ou angulaire, leur vecteur-vitesse, en particulier sa composante radiale qui est plus facile à mesurer précisément par effet Doppler. Un autre critère est par exemple l'évolution de ces paramètres au cours du temps. Dans une variante, la fusion des données prend aussi en compte des données issues d'au moins un autre capteur. Un tel capteur est notamment monté sur l'aéronef 10, comme par exemple un récepteur ADS-B (pour « automatic dependent surveillance-broadcast » en anglais), un dispositif FLARM (pour « flight alarm » en anglais), ou un transpondeur. Alternativement, le capteur peut être extérieur à l'aéronef, au sol par exemple.

En particulier, les extrémités avant 122, 142 des poutres latérales 12, 14 sont situées derrière l'extrémité avant 162 de la poutre centrale 16 suivant un sens arrière-avant de l'aéronef 10. Les extrémités avant 122, 142 des poutres latérales 12, 14 se situent à une distance OP de l'extrémité 162 de la poutre centrale 16 suivant la direction longitudinale X.

Notamment, l'aéronef 10 comprend une voilure A, de préférence située à un coté avant de l'aéronef 10. La voilure A comprend en particulier deux ailes situées de part et d'autre de la poutre centrale 16. La voilure A croise les poutres 12, 14, 16 et est sensiblement perpendiculaire à celles-ci. Seule l'envergure $2WW_R$ de la voilure A est représentée en figure 1, avec une distance b/2 entre une extrémité $W_R$ de la voilure A et la poutre centrale 16. Notamment, la distance b/2 s'apprécie depuis un axe central de la poutre centrale 16 s'étendant le long de la direction longitudinale X. Les extrémités distales $W_R$ de la voilure A sont à une distance PW de l'extrémité avant 162 de la poutre centrale 16 suivant ladite direction longitudinale X. En particulier, les poutres 12, 14, 16 sont reliées entre elles par la voilure A et par un empennage non représenté en figure 1.

Les positions des radars 124, 144 peuvent être adaptées pour prendre en compte la position des extrémités 122, 142 des poutres latérales 12, 14 à l'arrière de l'extrémité 162 de la poutre centrale 16. Les positions des radars 124, 144 peuvent aussi être adaptées pour prendre en compte la présence de la voilure A.

Ainsi, de préférence, l'angle m de chaque radar 124, 144 par rapport à la direction longitudinale X est choisi de sorte que l'hélice 18 reste hors du champ de vision horizontal des radars 122, 124. Un masquage des radars 122,124 par l'hélice 18 peut aussi être évité en adaptant la distance OP entre l'extrémité 162 de la poutre centrale 16 et les extrémités 122, 142 des poutres latérales 12, 14. Cette distance OP s'apprécie notamment suivant la direction longitudinale X.

En particulier, le diamètre $PP_R$ de l'hélice 18 est de préférence inférieur à une distance $PA_R$ entre un centre P de l'hélice 18 et le champ de vision horizontal du radar 124, 144 le long d'une perpendiculaire à la direction longitudinale X passant par le centre P de l'hélice 18. Ainsi, on évite un masquage des radars 124, 144 par l'hélice 18.

En outre, l'angle m de chaque radar 124, 144 par rapport à la direction longitudinale X est de préférence choisi de sorte que la voilure A reste hors du champ de vision horizontal des radars 124, 144. On peut aussi adapter la distance OP entre l'extrémité 162 de la poutre centrale 16 et les extrémités 122, 142 des poutres latérales 12, 14 suivant la direction longitudinale X.

En particulier, en considérant une perpendiculaire Y à l'axe longitudinal X passant par un foyer $O_R$, $O_L$ du radar 124, 144, la projection $C_R$ de l'extrémité $W_R$ de la voilure A sur l'axe Y permet d'ajuster l'angle m du radar 124,144 correspondant. De même, l'intersection $B_R$ du bord du champ de vision horizontal du radar 124, 144 avec une droite passant par la projection $C_R$ et parallèle à l'axe longitudinal X permet d'ajuster l'angle m du radar 124,144 correspondant. Ainsi, la distance entre cette projection $C_R$ et cette intersection $B_R$ est de préférence inférieure à la distance entre la projection $C_R$ et l'extrémité $W_R$ de la voilure A. Ainsi, on évite un masquage des radars 124, 144 par la voilure A.

De préférence, l'angle m des radars 124, 144 et la position des extrémités avant 122, 142 des poutres latérales 12, 14 sont adaptées pour prendre en compte les présences de la voilure A et de l'hélice 18. En particulier, l'angle m des champs de vision horizontaux des radars 124, 144 par rapport à la direction longitudinale X, le demi angle d'ouverture maximal a des radars 124, 144, la distance b/2 des extrémités distales $W_R$ de la voilure A par rapport à la poutre centrale 16, le diamètre D de l'hélice 18, la distance OP de l'extrémité avant 162 de la poutre centrale 16 par rapport aux extrémités avant 122, 142 des poutres latérales 12, 14 suivant la direction longitudinale X, et la distance PW entre les extrémités distales $W_R$ de la voilure A et l'extrémité avant 162 de la poutre centrale 16 suivant ladite direction longitudinale X, sont tels qu'ils respectent les relations suivantes :

[Math 3]

$$\frac{D}{2} < \frac{L}{2} - OP \times \tan(a - m)$$

[Math 4]

$$\left(\frac{b}{2} - \frac{L}{2}\right) \times \tan(a + m - 90) < PW - OP.$$

La présente invention a été décrite en relation avec un exemple particulier. Cependant, des caractéristiques peuvent être modifiées dans un exemple d'aéronef selon l'invention tel que défini par les revendications.

## Revendications

1. Aéronef sans équipage 10 comprenant trois poutres parallèles 12, 14, 16 s'étendant suivant au moins une direction longitudinale X depuis un côté arrière jusqu'à un côté avant de l'aéronef,

   la poutre centrale 16 formant un fuselage principal contenant un système motopropulseur, une hélice 18 de diamètre D configurée pour être entrainée par ledit système motopropulseur étant attachée à une extrémité avant 162 de la poutre centrale 16,
   chaque poutre latérale 12, 14 étant à une distance L/2 de ladite poutre centrale 16 ;
   chaque poutre latérale 12, 14 portant un radar 124, 144 **caractérisé en ce que** chaque radar est porté à une extrémité avant de la poutre ; et
   que les extrémités avant 122, 142 des poutres latérales 12, 14 sont situées derrière l'extrémité avant 162 de la poutre centrale 16 suivant un sens arrière-avant de l'aéronef 10, à une distance OP de l'extrémité avant 162 de la poutre centrale 16 suivant ladite direction longitudinale X.

2. Aéronef 10 selon la revendication 1, dans lequel les champs de vision horizontaux des radars 124, 144 ont un demi angle d'ouverture maximal a et les radars 124, 144 sont orientés de sorte que leur champ de vision horizontal respectif est orienté vers l'extérieur avec un angle m par rapport à la direction longitudinale X.

3. Aéronef 10 selon la revendication 2, dans lequel les champs de vision horizontaux des radars 124, 144 ont respectivement une zone angulaire périphérique d'angle δa dans laquelle la sensibilité du radar 124, 144 est atténuée par rapport à la sensibilité du radar 124, 144 dans une zone centrale du champ de vision horizontal, l'angle m par rapport à la direction longitudinale X étant égal à la différence entre le demi angle d'ouverture maximal a et l'angle δa de ladite zone angulaire périphérique.

**4.** Aéronef 10 selon l'une des revendications précédentes, comprenant une voilure A croisant lesdites poutres 12, 14, 16 de manière sensiblement perpendiculaire, les extrémités distales $W_R$ de la voilure A étant à une distance b/2 par rapport à la poutre centrale 16, et à une distance PW par rapport à l'extrémité avant 162 de la poutre centrale 16 suivant ladite direction longitudinale X.

**5.** Aéronef 10 selon l'une des revendications précédentes , dans lequel ladite distance OP entre l'extrémité avant 162 de la poutre centrale 16 et les extrémités avant 122, 142 des poutres latérales 12, 14 suivant ladite direction longitudinale X est configurée de sorte que ladite hélice 18 est hors du champ de vision horizontal des radars 124, 144.

**6.** Aéronef 10 selon l'une des revendications précédentes, dans lequel ladite distance OP entre l'extrémité avant 162 de la poutre centrale 16 et les extrémités avant 122, 142 des poutres latérales 12, 14 suivant ladite direction longitudinale X est configurée de sorte que ladite voilure A est hors du champ de vision horizontal des radars 124, 144.

**7.** Aéronef 10 selon la revendication 2 ou 3 et la revendication 4, dans lequel l'angle m par rapport à la dite direction longitudinale X est configuré de sorte que ladite voilure A est hors du champ de vision horizontal des radars 124, 144.

**8.** Aéronef 10 selon la revendication 2 ou 3 , dans lequel l'angle m par rapport à la dite direction longitudinale X est configuré de sorte que ladite hélice 18 est hors du champ de vision horizontal des radars 124, 144.

**9.** Aéronef 10 selon les revendications 2, 4 et 5 dans lequel l'angle m des champs de vision horizontaux des radars 124, 144 par rapport à la direction longitudinale X, le demi angle d'ouverture maximal a des radars, la distance b/2 des extrémités distales $W_R$ de la voilure A par rapport à la poutre centrale 16, le diamètre D de l'hélice 18, la distance OP entre l'extrémité avant 162 de la poutre centrale 16 et les extrémités avant 122, 142 des poutres latérales 12, 14 suivant ladite direction longitudinale X, et la distance PW entre les extrémités distales $W_R$ de la voilure et l'extrémité avant 162 de la poutre centrale suivant ladite direction longitudinale X sont tels que :

[Math 5]

$$\frac{D}{2} < \frac{L}{2} - OP \times \tan(a - m)$$

[Math 6]

$$\left(\frac{b}{2} - \frac{L}{2}\right) \times \tan(a + m - 90) < PW - OP.$$

**10.** Aéronef 10 selon l'une des revendications précédentes, dans lequel les dites poutres latérales 12, 14 forment des fuselages secondaires de l'aéronef 10, et de préférence comprennent respectivement une unité électronique de commande de leur radar respectif.

**11.** Aéronef 10 selon l'une des revendications précédentes, comprenant une unité de commande configurée pour réaliser une fusion des données issues des radars 124, 144 portés par lesdites poutres latérales 12, 14, ou une fusion des données issues des radars 124, 144 et des données issues d'au moins un autre capteur.

**Patentansprüche**

**1.** Unbemanntes Luftfahrzeug 10, umfassend drei parallele Träger 12, 14, 16, die sich in mindestens einer Längsrichtung X von einer Rückseite zu einer Vorderseite des Luftfahrzeugs erstrecken,

wobei der mittlere Träger 16 einen Hauptrumpf bildet, der ein Triebwerksystem enthält, wobei ein Propeller 18 mit dem Durchmesser D, der dafür konfiguriert ist, von dem Triebwerksystem angetrieben zu werden, an einem vorderen Ende 162 des mittleren Trägers 16 angebracht ist,
wobei sich jeder seitliche Träger 12, 14 in einem Abstand L/2 zu dem mittleren Träger 16 befindet;
wobei jeder seitliche Träger 12, 14 einen Radar 124, 144 trägt, **dadurch gekennzeichnet, dass** jeder Radar an einem vorderen Ende des Trägers getragen ist; und

dass sich die vorderen Enden 122, 142 der seitlichen Träger 12, 14 hinter dem vorderen Ende 162 des mittleren Trägers 16 in einer Richtung von hinten nach vorne des Luftfahrzeugs 10 in einem Abstand OP zu dem vorderen Ende 162 des mittleren Trägers 16 in der Längsrichtung X befinden.

2. Luftfahrzeug 10 nach Anspruch 1, wobei die horizontalen Sichtfelder der Radare 124, 144 einen maximalen Öffnungshalbwinkel a aufweisen und die Radare 124, 144 derart ausgerichtet sind, dass ihr jeweiliges horizontales Sichtfeld mit einem Winkel m in Bezug auf die Längsrichtung X nach außen ausgerichtet ist.

3. Luftfahrzeug 10 nach Anspruch 2, wobei die horizontalen Sichtfelder der Radare 124, 144 jeweils einen Winkelrandbereich eines Winkels $\delta a$ aufweisen, in dem die Empfindlichkeit des Radars 124, 144 in Bezug auf die Empfindlichkeit des Radars 124, 144 in einem mittleren Bereich des horizontalen Sichtfelds abgeschwächt ist, wobei der Winkel m in Bezug auf die Längsrichtung X gleich der Differenz zwischen dem maximalen Öffnungshalbwinkel a und dem Winkel $\delta a$ des Winkelrandbereichs ist.

4. Luftfahrzeug 10 nach einem der vorhergehenden Ansprüche, umfassend eine Tragfläche A, die die Träger 12, 14, 16 im Wesentlichen senkrecht kreuzt, wobei die distalen Enden $W_R$ der Tragfläche A in einem Abstand b/2 in Bezug auf den mittleren Träger 16 und in einem Abstand PW in Bezug auf das vordere Ende 162 des mittleren Trägers 16 in der Längsrichtung X liegen.

5. Luftfahrzeug 10 nach einem der vorhergehenden Ansprüche, wobei der Abstand OP zwischen dem vorderen Ende 162 des mittleren Trägers 16 und den vorderen Enden 122, 142 der seitlichen Träger 12, 14 in der Längsrichtung X derart konfiguriert ist, dass der Propeller 18 außerhalb des horizontalen Sichtfelds der Radare 124, 144 liegt.

6. Luftfahrzeug 10 nach einem der vorhergehenden Ansprüche, wobei der Abstand OP zwischen dem vorderen Ende 162 des mittleren Trägers 16 und den vorderen Enden 122, 142 der seitlichen Träger 12, 14 in der Längsrichtung X derart konfiguriert ist, dass die Tragfläche A außerhalb des horizontalen Sichtfelds der Radare 124, 144 liegt.

7. Luftfahrzeug 10 nach Anspruch 2 oder 3 und Anspruch 4, wobei der Winkel m in Bezug auf die Längsrichtung X derart konfiguriert ist, dass die Tragfläche A außerhalb des horizontalen Sichtfelds der Radare 124, 144 liegt.

8. Luftfahrzeug 10 nach Anspruch 2 oder 3, wobei der Winkel m in Bezug auf die Längsrichtung X derart konfiguriert ist, dass der Propeller 18 außerhalb des horizontalen Sichtfelds der Radare 124, 144 liegt.

9. Luftfahrzeug 10 nach den Ansprüchen 2, 4 und 5, wobei der Winkel m der horizontalen Sichtfelder der Radare 124, 144 in Bezug auf die Längsrichtung X, der maximale Öffnungshalbwinkel a der Radare, der Abstand b/2 der distalen Enden $W_R$ der Tragfläche A in Bezug auf den mittleren Träger 16, der Durchmesser D des Propellers 18, der Abstand OP zwischen dem vorderen Ende 162 des mittleren Trägers 16 und den vorderen Enden 122, 142 der seitlichen Träger 12, 14 in der Längsrichtung X und der Abstand PW zwischen den distalen Enden $W_R$ der Tragfläche und dem vorderen Ende 162 des mittleren Trägers in der Längsrichtung X derart sind, dass:

[Math 5]

$$\frac{D}{2} < \frac{L}{2} - OP \times \tan(a - m)$$

[Math 6]

$$\left(\frac{b}{2} - \frac{L}{2}\right) \times \tan(a + m - 90) < PW - OP.$$

10. Luftfahrzeug 10 nach einem der vorhergehenden Ansprüche, wobei die seitlichen Träger 12, 14 sekundäre Rümpfe des Luftfahrzeugs 10 bilden und vorzugsweise jeweils eine elektronische Steuereinheit ihres jeweiligen Radars umfassen.

11. Luftfahrzeug 10 nach einem der vorhergehenden Ansprüche, umfassend eine Steuereinheit, die dafür konfiguriert ist, ein Zusammenführen der aus den Radaren 124, 144 stammenden Daten, die von den seitlichen Trägern 12, 14 getragen werden, vorzunehmen, oder ein Zusammenführen der aus den Radaren 124, 144 stammenden Daten und der aus mindestens einem anderen Sensor ausgegebenen Daten vorzunehmen.

**Claims**

1.  An unmanned aircraft 10 comprising three parallel beams 12, 14, 16 extending in at least one longitudinal direction X from a rear side to a front side of the aircraft,

    the central beam 16 forming a main fuselage containing a powertrain, with a propeller 18 of diameter D configured to be driven by said powertrain being attached to a front end 162 of the central beam 16,
    each side beam 12, 14 being at a distance L/2 from said central beam 16;
    each side beam 12, 14 supporting a radar 124, 144 **characterised in that** each radar is supported at a front end of the beam; and
    **in that** the front ends 122, 142 of the side beams 12, 14 are located behind the front end 162 of the central beam 16 in a rear-front direction of the aircraft 10, at a distance OP from the front end 162 of the central beam 16 in said longitudinal direction X.

2.  The aircraft 10 according to claim 1, wherein the horizontal fields of view of the radars 124, 144 have a maximum semi-aperture angle a and the radars 124, 144 are oriented so that their respective horizontal field of view is outwardly oriented at an angle m relative to the longitudinal direction X.

3.  The aircraft 10 according to claim 2, wherein the horizontal fields of view of the radars 124, 144 respectively have a peripheral angular zone having an angle $\delta a$, in which zone the sensitivity of the radar 124, 144 is attenuated relative to the sensitivity of the radar 124, 144 in a central zone of the horizontal field of view, with the angle m relative to the longitudinal direction X being equal to the difference between the maximum semi-aperture angle a and the angle $\delta a$ of said peripheral angular zone.

4.  The aircraft 10 according to one of the preceding claims, comprising a wing unit A crossing said beams 12, 14, 16 in a substantially perpendicular manner, with the distal ends $W_R$ of the wing unit A being at a distance b/2 relative to the central beam 16, and at a distance PW relative to the front end 162 of the central beam 16 in said longitudinal direction X.

5.  The aircraft 10 according to one of the preceding claims, wherein said distance OP between the front end 162 of the central beam 16 and the front ends 122, 142 of the side beams 12, 14 in said longitudinal direction X is configured so that said propeller 18 is outside the horizontal field of view of the radars 124, 144.

6.  The aircraft 10 according to one of the preceding claims, wherein said distance OP between the front end 162 of the central beam 16 and the front ends 122, 142 of the side beams 12, 14 in said longitudinal direction X is configured so that said wing unit A is outside the horizontal field of view of the radars 124, 144.

7.  The aircraft 10 according to claim 2 or 3 and claim 4, wherein the angle m relative to said longitudinal direction X is configured so that said wing unit A is outside the horizontal field of view of the radars 124, 144.

8.  The aircraft 10 according to claim 2 or 3, wherein the angle m relative to said longitudinal direction X is configured so that said propeller 18 is outside the horizontal field of view of the radars 124, 144.

9.  The aircraft 10 according to claims 2, 4 and 5, wherein the angle m of the horizontal fields of view of the radars 124, 144 relative to the longitudinal direction X, the maximum semi-aperture angle a of the radars, the distance b/2 of the distal ends $W_R$ of the wing unit A relative to the central beam 16, the diameter D of the propeller 18, the distance OP between the front end 162 of the central beam 16 and the front ends 122, 142 of the side beams 12, 14 in said longitudinal direction X, and the distance PW between the distal ends $W_R$ of the wing unit and the front end 162 of the central beam in said longitudinal direction X are such that:

    [Math 5]

    $$\frac{D}{2} < \frac{L}{2} - OP \times \tan(a - m)$$

[Math 6]

$$\left(\frac{b}{2} - \frac{L}{2}\right) \times \tan(a + m - 90) < PW - OP.$$

10. The aircraft 10 according to one of the preceding claims, wherein said side beams 12, 14 form secondary fuselages of the aircraft 10, and preferably respectively comprise an electronic control unit for their respective radar.

11. The aircraft 10 according to any of the preceding claims, comprising a control unit configured to combine the data originating from the radars 124, 144 supported by said side beams 12, 14, or to combine the data originating from the radars 124, 144 and the data originating from at least one other sensor.

- N/A

Figure 1

FIG.1

Figure 2

FIG.2

## RÉFÉRENCES CITÉES DANS LA DESCRIPTION

**Documents brevets cités dans la description**

- US 5145129 A